(19) Europäisches Patentamt
European Patent Office
Office européen des brevets

(11) EP 3 280 834 B1

(12) **EUROPÄISCHE PATENTSCHRIFT**

(45) Veröffentlichungstag und Bekanntmachung des Hinweises auf die Patenterteilung:
**17.04.2019 Patentblatt 2019/16**

(21) Anmeldenummer: **16724025.8**

(22) Anmeldetag: **19.05.2016**

(51) Int Cl.:
***C25B 3/04*** (2006.01)
***C25B 1/04*** (2006.01)
***C25B 1/00*** (2006.01)
***C25B 9/08*** (2006.01)
***C25B 15/08*** (2006.01)

(86) Internationale Anmeldenummer:
**PCT/EP2016/061177**

(87) Internationale Veröffentlichungsnummer:
**WO 2016/188829 (01.12.2016 Gazette 2016/48)**

(54) **ELEKTROLYSESYSTEM ZUR ELEKTROCHEMISCHEN KOHLENSTOFFDIOXID-VERWERTUNG MIT PROTONENSPENDER-EINHEIT UND REDUKTIONSVERFAHREN**

ELECTROLYSIS SYSTEM FOR THE ELECTROCHEMICAL UTILIZATION OF CARBON DIOXIDE, HAVING A PROTON DONOR UNIT, AND REDUCTION METHOD

SYSTÈME D’ÉLECTROLYSE DESTINÉ À UNE VALORISATION DU DIOXYDE DE CARBONE PAR VOIE ÉLECTROCHIMIQUE, ET POURVU D’UNE UNITÉ DONNEUR DE PROTONS, ET PROCÉDÉ DE RÉDUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2015 DE 102015209509**

(43) Veröffentlichungstag der Anmeldung:
**14.02.2018 Patentblatt 2018/07**

(73) Patentinhaber: **Siemens Aktiengesellschaft**
**80333 München (DE)**

(72) Erfinder:
- **KRAUSE, Ralf**
  **91074 Herzogenaurach (DE)**
- **NEUBAUER, Sebastian**
  **96149 Breitengüßbach (DE)**
- **RELLER, Christian**
  **32425 Minden (DE)**
- **SCHMID, Günter**
  **91334 Hemhofen (DE)**
- **VOLKOVA, Elena**
  **91052 Erlangen (DE)**

(56) Entgegenhaltungen:
**WO-A1-2012/128148**
**WO-A1-2013/178803**
**US-A1- 2012 318 680**
**US-A1- 2013 105 304**
**US-A1- 2013 186 771**
**US-A1- 2014 093 799**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 280 834 B1

Printed by Jouve, 75001 PARIS (FR)

## Beschreibung

Die vorliegende Erfindung betrifft ein Reduktionsverfahren und ein Elektrolysesystem zur elektrochemischen Kohlenstoffdioxid-Verwertung. Kohlenstoffdioxid wird in eine Elektrolysezelle eingeleitet und an einer Kathode reduziert.

Stand der Technik

Aktuell wird ca. 80 % des weltweiten Energiebedarfs durch die Verbrennung von fossilen Brennstoffen gedeckt, deren Verbrennungsprozesse eine weltweite Emission von etwa 34000 Millionen Tonnen Kohlenstoffdioxid in die Atmosphäre pro Jahr verursacht. Durch diese Freisetzung in die Atmosphäre wird der Großteil an Kohlenstoffdioxid entsorgt, was z.B. bei einem Braunkohlekraftwerk bis zu 50000 Tonnen pro Tag betragen kann. Kohlenstoffdioxid gehört zu den sogenannten Treibhausgasen, deren negative Auswirkungen auf die Atmosphäre und das Klima diskutiert werden. Da Kohlenstoffdioxid thermodynamisch sehr niedrig liegt, kann es nur schwierig zu wiederverwertbaren Produkten reduziert werden, was die tatsächliche Wiederverwertung von Kohlenstoffdioxid bisher in der Theorie beziehungsweise in der akademischen Welt belassen hat.

Ein natürlicher Kohlenstoffdioxid-Abbau erfolgt beispielsweise durch Fotosynthese. Dabei werden in einem zeitlich und auf molekularer Ebene räumlich in viele Teilschritte aufgegliederten Prozess Kohlenstoffdioxid zu Kohlehydraten umgesetzt. Dieser Prozess ist so nicht einfach großtechnisch adaptierbar. Eine Kopie des natürlichen Fotosyntheseprozesses mit großtechnischer Fotokatalyse ist bisher nicht ausreichend effizient.

Eine Alternative stellt die elektrochemische Reduktion des Kohlenstoffdioxids dar. Systematische Untersuchungen der elektrochemischen Reduktion von Kohlenstoffdioxid sind noch ein relativ junges Entwicklungsfeld. Erst seit wenigen Jahren gibt es Bemühungen, ein elektrochemisches System zu entwickeln, das eine akzeptable Kohlenstoffdioxidmenge reduzieren kann. Forschungen im Labormaßstab haben gezeigt, dass zur Elektrolyse von Kohlenstoffdioxid bevorzugt Metalle als Katalysatoren einzusetzen sind. Aus der Veröffentlichung Electrochemical $CO_2$ reduction on metal electrodes von Y. Hori, veröffentlicht in: C. Vayenas, et al. (Eds.), Modern Aspects of Electrochemistry, Springer, New York, 2008, S. 89-189, sind Faraday Effizienzen an unterschiedlichen Metallkathoden zu entnehmen, siehe Tabelle 1 . Wird Kohlenstoffdioxid beispielsweise an Silber-, Gold-, Zink-, Palladium- und Galliumkathoden nahezu ausschließlich zu Kohlenstoffmonoxid reduziert, entstehen an einer Kupferkathode, eine Vielzahl an Kohlenwasserstoffen als Reaktionsprodukte.

So würden beispielsweise an einer Silberkathode überwiegend Kohlenmonoxid und wenig Wasserstoff entstehen. Mögliche Reaktionen an Anode und Kathode können mit folgenden Reaktionsgleichungen dargestellt werden:

Kathode:

$$2\,CO_2 + 4\,e^- + 2\,H_2O \rightarrow 2\,CO + 4\,OH^-$$
$$2\,CO_2 + 12\,e^- + 8\,H_2O \rightarrow C_2H_4 + 12\,OH^-$$
$$CO_2 + 8\,e^- + 6\,H_2O \rightarrow CH_4 + 8\,OH^-$$

Anode:

$$2\,H_2O \rightarrow O_2 + 4\,H^+ + 4\,e^-$$

Oder alternativ, wenn ein chloridhaltiger Elektrolyt vorliegt: $2\,Cl^- \rightarrow Cl_2 + 2\,e^-$

Von besonderem wirtschaftlichem Interesse ist beispielsweise die elektrochemische Erzeugung von Kohlenstoffmonoxid, Methan oder Ethen. Dabei handelt es sich um energetisch höherwertige Produkte als Kohlenstoffdioxid.

Tabelle 1: In der Tabelle sind Faraday Effizienzen [%] von Produkten angegeben, die bei der Kohlenstoffdioxid-Reduktion an verschiedenen Metallelektroden entstehen. Die angegebenen Werte gelten für eine 0,1 M Kaliumhydrogencarbonatlösung als Elektrolyten und Stromdichten unterhalb von 10 mA/cm$^2$.

| Elektrode | $CH_4$ | $C_2H_4$ | $C_2H_5OH$ | $C_3H_7OH$ | CO | $HCOO^-$ | $H_2$ | Total |
|---|---|---|---|---|---|---|---|---|
| Cu | 33.3 | 25.5 | 5.7 | 3.0 | 1.3 | 9.4 | 20.5 | 103.5 |
| Au | 0.0 | 0.0 | 0.0 | 0.0 | 87.1 | 0.7 | 10.2 | 98.0 |
| Ag | 0.0 | 0.0 | 0.0 | 0.0 | 81.5 | 0.8 | 12.4 | 94.6 |
| Zn | 0.0 | 0.0 | 0.0 | 0.0 | 79.4 | 6.1 | 9.9 | 95.4 |
| Pd | 2.9 | 0.0 | 0.0 | 0.0 | 28.3 | 2.8 | 26.2 | 60.2 |
| Ga | 0.0 | 0.0 | 0.0 | 0.0 | 23.2 | 0.0 | 79.0 | 102.0 |
| Pb | 0.0 | 0.0 | 0.0 | 0.0 | 0.0 | 97.4 | 5.0 | 102.4 |
| Hg | 0.0 | 0.0 | 0.0 | 0.0 | 0.0 | 99.5 | 0.0 | 99.5 |

(fortgesetzt)

| Elektrode | $CH_4$ | $C_2H_4$ | $C_2H_5OH$ | $C_3H_7OH$ | CO | $HCOO^-$ | $H_2$ | Total |
|---|---|---|---|---|---|---|---|---|
| In | 0.0 | 0.0 | 0.0 | 0.0 | 2.1 | 94.9 | 3.3 | 100.3 |
| Sn | 0.0 | 0.0 | 0.0 | 0.0 | 7.1 | 88.4 | 4.6 | 100.1 |
| Cd | 1.3 | 0.0 | 0.0 | 0.0 | 13.9 | 78.4 | 9.4 | 103.0 |
| Tl | 0.0 | 0.0 | 0.0 | 0.0 | 0.0 | 95.1 | 6.2 | 101.3 |
| Ni | 1.8 | 0.1 | 0.0 | 0.0 | 0.0 | 1.4 | 88.9 | 92.4 |
| Fe | 0.0 | 0.0 | 0.0 | 0.0 | 0.0 | 0.0 | 94.8 | 94.8 |
| Pt | 0.0 | 0.0 | 0.0 | 0.0 | 0.0 | 0.1 | 95.7 | 95.8 |
| Ti | 0.0 | 0.0 | 0.0 | 0.0 | 0.0 | 0.0 | 99.7 | 99.7 |

Bei der elektrochemischen Stoffumsetzung von Kohlenstoffdioxid in ein energetisch höher wertiges Produkt ist die Erhöhung der Stromdichte und damit die Erhöhung des Stoffumsatzes von Interesse. Es ist nicht einfach, eine hohe Stromdichte zu gewährleisten oder diese noch weiter zu erhöhen, denn in den bisher bekannten Methoden und verwendeten Elektrolysesystemen müssen makrokinetische Effekte, wie beispielsweise Stofftransportlimitierungen in unmittelbarer Nähe der Flüssig-Fest-Grenzfläche vom Elektrolyten zur Elektrode berücksichtigt werden. Die Kohlenstoffdioxidreduktion erfolgt an der katalytisch aktiven Kathodenoberfläche.

Bisher wurde dem Problem der Stofftransportlimitierung durch die Verwendung von Gasdiffusionselektroden begegnet, welche prozessintensivierend wirken können und bisherige elektrochemische Verfahren durchaus schon wirtschaftlich und konkurrenzfähig gemacht haben. Über diesen Ansatz hinaus ist bislang keine weitere Stoffumsatzsteigerung möglich.

Elektrolysezellen, die zur elektrochemischen Reduktion von Kohlenstoffdioxid geeignet sind, bestehen üblicherweise aus einem Anoden- und einem Kathodenraum. In den Figuren 2 bis 4 sind in schematischer Darstellung Beispiele von Zellanordnungen gezeigt. Der Aufbau mit Gasdiffusionselektrode ist beispielsweise in Figur 3 gezeigt. In dieser Ausführung einer Elektrolysezelle wird das Kohlenstoffdioxid durch eine poröse Kathode hindurch direkt aus der Kathodenoberfläche in den Kathodenraum eingebracht.

US 2013/105304 A1, US 2013/186771 A1, US 2014/093799 A1, US 2012/318680 A1, WO 2013/178803 A1 und WO 2012/128148 A1 offenbaren Elektrolysezellen für die Reduktion von Kohlenstoffdioxid.

Die bisherigen Methoden zur Kohlenstoffdioxidreduktion berücksichtigen lediglich die Umsetzung von physikalisch gelöstem oder gasförmig vorliegendem Kohlenstoffdioxid im Reaktionsraum. Keiner der bekannten Lösungsansätze zur Kohlenstoffdioxidreduktion berücksichtigt den chemisch gebundenen Kohlenstoffdioxidanteil im Elektrolysesystem: Die gesamte Stoffmenge an Kohlenstoffdioxid, die im Elektrolysesystem vorliegt, setzt sich aus einem chemischen und aus einem physikalischen Anteil zusammen. Ob das Kohlenstoffdioxid chemisch gebunden oder physikalisch gelöst im Elektrolyten vorliegt, hängt von verschiedenen Faktoren ab, wie z.B. dem pH-Wert, der Temperatur, der Elektrolytkonzentration oder dem Partialdrucks des Kohlenstoffdioxids. Beide Kohlenstoffdioxid-Anteile gehen eine Gleichgewichtsbeziehung ein. Im System Kohlenstoffdioxid in wässriger Carbonat- bzw. Hydrogencarbonatlösung, kann diese Gleichgewichtsbeziehung durch die folgende chemische Gleichung beschrieben werden:

$$CO_2+H_2O \rightleftarrows H_2CO_3 \rightleftarrows HCO_3^-+H^+ \rightleftarrows CO_3^{2-}+H^+ \qquad \text{Gl.1}$$

Als Kohlensäure ($H_2CO_3$) oder als Carbonat ($CO_3^{2-}$), z.B. als Kaliumcarbonat oder Kaliumhydrogencarbonat wie es in einem System zu Pottaschewäsche beispielsweise vorkommt, liegt das Kohlenstoffdioxid chemisch gebunden vor. Kohlenstoffdioxid kann aber auch gasförmig oder physikalisch gelöst vorliegen. Auch der physikalische Lösungsprozess erfolgt bis zur Einstellung eines Lösungsgleichgewichtes, welches unter der Annahme des Henryschen Gesetzes ebenfalls temperatur-, konzentrations- und druckabhängig ist:

$$\chi_i \cdot H_{ij} = P \qquad \text{Gl.2}$$

Dabei steht $\chi_i$ für die Stoffmenge und beträgt weniger als 0,01. P steht für den Druck und beträgt weniger als 2 bar. $H_{ij}$ steht für die Henrykonstante.

Es wurde gezeigt, z.B. in der Veröffentlichung CO2-reduction, catalyzed by metal electrodes von Y. Hori, veröffentlicht in: Handbook of Fuel Cells - Fundamentals, Technology and Applications, W. Vielstich et al. (Eds.), John Wiley & Sons, Ltd., 2010, S. 2 bzw. Fig.1, dass ausschließlich physikalisch gelöstes Kohlenstoffdioxid für eine elektrochemische Umsetzung zugänglich ist. Wollte man dieses physikalisch gelöste Kohlenstoffdioxid gemäß Henryschem

Gesetz erhöhen, beispielsweise über einen erhöhten Kohlenstoffdioxidpartialdruck P, hätte dies nach der chemischen Gleichgewichtsreaktion Gl. 1 zur Folge, dass ein großer Anteil zu Carbonaten oder Hydrogencarbonaten reagiert und somit die eigentliche Kohlenstoffdioxidkonzentration in Lösung wieder vermindert wird.

Trotz der Erhöhung des gelösten Kohlenstoffdioxidanteils kommt es direkt an der Elektrodenoberfläche, bei zunehmendem Stoffumsatz, zu einer Limitierung durch den Stofftransport aus dem Kathodenraum an die Kathodengrenzfläche. In so einem Fall kann auch eine unerwünschte Wasserstoffproduktion an der Reaktionsfläche als Konkurrenzprozess zur Kohlenstoffdioxidreduktion zunehmen. Die Bildung von Wasserstoff an der Kathodenoberfläche wiederum führt zwangsläufig zu einer sehr nachteiligen Abnahme der Produktselektivität.

In der Figur 1 ist zur Verdeutlichung der Abhängigkeit von den Konzentrations- und pH-Wertparametern ein Beispiel für ein Hägg-Diagramm einer 0,05 molaren Lösung von Kohlenstoffdioxid gezeigt. In einem mittleren pH-Wert Bereich liegen Kohlenstoffdioxid und dessen Salze nebeneinander vor. Während im stark basischen Kohlenstoffdioxid ($CO_2$) bevorzugt als Carbonat ($CO_3^{2-}$), im mittleren pH-Wert-Bereich bevorzugt als Hydrogencarbonat ($HCO_3^-$) vorliegt, kommt es bei niedrigen pH-Werten im sauren Milieu zur Austreibung der Hydrogencarbonationen aus der Lösung in Form von Kohlenstoffdioxid. Dem Hägg-Diagramm bzw. den Gleichungen 1 und 2 zufolge kann die Kohlenstoffdioxidkonzentration in einem hydrogencarbonathaltigen Elektrolyten sehr gering sein trotz hoher Hydrogencarbonatkonzentration im Bereich von 0,1 mol/l bis weit über 1 mol/l bis zur Löslichkeitsgrenze des entsprechenden Salzes.

Anhand dieses Diagramms kann also noch einmal verdeutlicht werden, dass je nach pH-Wert und Konzentration ein großer Kohlenstoffdioxidanteil chemisch gebunden vorliegt und somit für die elektrochemische Verwertung nicht zur Verfügung steht.

Folglich stellt es sich als technisch erforderlich dar, eine verbesserte Lösung für die elektrochemische Kohlenstoffdioxid-Verwertung vorzuschlagen, welche die aus dem Stand der Technik bekannten Nachteile vermeidet. Insbesondere soll die vorzuschlagende Lösung eine besonders effektive Kohlenstoffdioxidumsetzung ermöglichen. Es ist Aufgabe der Erfindung, ein verbessertes Reduktionsverfahren und Elektrolysesystem zur Kohlenstoffdioxid-Verwertung anzugeben.

Diese der vorliegenden Erfindung zugrundeliegenden Aufgaben werden durch ein Elektrolysesystem gemäß dem Patentanspruch 1 sowie durch ein Reduktionsverfahren gemäß dem Patentanspruch 10 gelöst. Vorteilhafte Ausgestaltungen der Erfindung sind Gegenstand der Unteransprüche.

Beschreibung der Erfindung

Das erfindungsgemäße Elektrolysesystem zur Kohlenstoffdioxid-verwertung umfasst eine Elektrolysezelle mit einer Anode in einem Anodenraum, einer Kathode in einem Kathodenraum und wenigstens einer Membran, wobei der Kathodenraum einen ersten Zugang für Kohlenstoffdioxid aufweist und ausgestaltet ist, das zugegangene Kohlenstoffdioxid in Kontakt mit der Kathode zu bringen. Unter Membran ist dabei eine mechanisch trennende Schicht zu verstehen, z.B. ein Diaphragma, welches zumindest die im Anodenraum und Kathodenraum entstehenden Elektrolyseprodukte voneinander trennt. Man könnte auch von Separatormembran oder Trennschicht sprechen. Da es sich bei den Elektrolyseprodukten auch um gasförmige Stoffe handeln kann wird bevorzugt eine Membran mit einem hohen Bubble-Point von 10 mbar oder größer eingesetzt. Der sogenannte Bubble-Point ist dabei eine definierende Größe für die eingesetzte Membran, der beschreibt, ab welchem Druckunterschied $\Delta P$ zwischen den zwei Seiten der Membran ein Gasfluss durch die Membran einsetzen würde.

Über den ersten Zugang für Kohlenstoffdioxid kann Kohlenstoffdioxid in chemisch gebundener Form, z.B. als Carbonat oder Hydrogencarbonat im Elektrolyten in den Kathodenraum eingebracht werden aber auch Kohlenstoffdioxidgas separat vom Elektrolyten oder physikalisch gelöstes Kohlenstoffdioxid in einem Elektrolyten kann über den ersten Zugang in den Kathodenraum eingebracht werden. Insbesondere handelt es sich um den Elektrolyt- und Edukteinlass. Auch wenn das Kohlenstoffdioxid gasförmig oder gelöst in den Kathodenraum eintritt, geht ein Anteil davon gemäß den oben beschriebenen Gleichgewichtsreaktionen eine chemische Verbindung mit im Elektrolyten enthaltenen Substanzen ein, insbesondere wenn ein basischer pH-Wert vorliegt.

Das Elektrolysesystem weist darüber hinaus eine Protonenspendereinheit auf und der Kathodenraum ist über einen zweiten Zugang für Protonen mit der Protonenspendereinheit verbunden. Der zweite Zugang für Protonen ist so ausgestaltet, dass die Protonen im Kathodenraum in Kontakt mit der Kathodenoberfläche gebracht werden. Die Protonenspendereinheit ist dabei dadurch definiert, dass tatsächlich freie Protonen, also Wasserstoffkationen bereitgestellt werden. Wasserstoff ($H_2$) oder andere Wasserstoffverbindungen sind keine Protonen im Sinne der erfindungsgemäßen Protonenspendereinheit.

Mittels der Protonenspendereinheit kann in dem Elektrolysesystem eine lokale pH-Wertabsenkung erfolgen, die die Bildung physikalisch gelösten Kohlenstoffdioxids an der Reaktionsgrenzfläche der Kathode fördert und somit den Stoffumsatz signifikant erhöht.

Es ist von dem Elektrolysesystem eine Protonenspendereinheit umfasst, die ein Protonenreservoir und eine protonendurchlässige Membran aufweist. Die protonendurchlässige Membran fungiert dabei als zweiter Zugang zum

Kathodenraum für die Protonen. Während das Protonenreservoir den Vorteil einer kontinuierlichen Nachlieferung an Protonen bietet, dient die protonendurchlässige Membran dazu, den reinen Ionenzufluss beziehungsweise Protonenzufluss zum Kathodenraum zu gewährleisten und gleichzeitig andere Moleküle, Flüssigkeiten oder Gase zurückzuhalten. Die protonendurchlässige Membran weist vorzugsweise sulfoniertes Polytetrafluoroethylen auf. Alternativ kann eine Kationenaustauschmembran als protonendurchlässige Membran eingesetzt werden.

In einer Ausführungsform der Erfindung weist das Elektrolysesystem ein Säurereservoir als Protonenreservoir auf, welches insbesondere eine Brönstedsäure umfasst. Eine Brönstedsäure ist z.B. Schwefelsäure, Phosphorsäure, Salpetersäure, Salzsäure oder auch verschiedene organische Säuren, wie beispielsweise Essigsäure oder Ameisensäure. Die Säuredefinition nach Brönsted beschreibt Säuren als sogenannte Protonendonatoren, also Teilchen die Protonen, d.h. positiv geladene Wasserstoffionen abgeben können. Gemäß der Definition des pKs-Wertes, bzw. nach Gleichung 1, werden bevorzugt Brönsted-Säuren eingesetzt, deren pKs-Wert entsprechend kleiner ist als der pKs-Wert der wässrigen Carbonat-, Hydrogencarbonat- bzw. Dihydrogencarbonatlösung. Kleiner heißt in diesem Fall, die Säure ist stärker.

Ein Vorteil des Säurereservoirs besteht darin, dass damit eine relativ kontinuierliche Protonenquelle geschaffen wird, die nicht auf einen zusätzlichen externen Energieeintrag angewiesen ist.

In einer weiteren Ausführungsform der Erfindung weist das Elektrolysesystem eine zweite protonendurchlässige Membran auf, welche sulfoniertes Polytetrafluorethylen aufweist. Bevorzugt wird als protonendurchlässige Membran eine Nafionmembran eingesetzt.

Diese Membran kann beispielsweise mehrschichtig oder porös ausgeführt sein. Als erste Membran, also als Separatormembran kann ebenfalls eine protonendurchlässige Membran, wie die der Protonenspendereinheit, eingesetzt werden.

Typischerweise umfasst der Kathodenraum des Elektrolysesystems ein Katholyt-Kohlenstoffdioxid-Gemisch, wobei der Katholyt Carbonat- und/oder Hydrogencarbonatanionen aufweist. Weiterhin weist der Katholyt im Kathodenraum des Elektrolysesystems insbesondere Alkalimetall- und/oder Ammoniumionen ($NH_4^+$) auf. Als Alkalimetalle werden die chemischen Elemente Lithium, Natrium, Kalium, Rubidium, Cäsium und Francium aus der ersten Hauptgruppe des Periodensystems bezeichnet. Der carbonat- und/oder hydrogencarbonathaltige Elektrolyt hat den Vorteil, chemisch gebundenes Kohlenstoffdioxid aufzuweisen. Alternativ oder zusätzlich kann Kohlenstoffdioxid in gelöster oder gasförmiger Form in den Kathodenraum eingebracht werden. Der pH-Wert des Katholyten im Kathodenraum beträgt vorzugsweise einen Wert zwischen 4 und 14.

In einer weiteren vorteilhaften Ausführungsform der Erfindung umfasst das Elektrolysesystem einen Anodenraum, der als Protonenreservoir fungiert. Dabei kann z. B. ein Elektrolysesystem zum Einsatz kommen, in dem eine einzige protonendurchlässige Membran gleichzeitig die Funktion der Trennung von Kathoden- und Anodenraum sowie die Funktion des Protonenzulasses in den Kathodenraum erfüllt. Alternativ ist der Anodenraum, der als Protonenreservoir fungiert, über die Membran und eine porös ausgeführte Anode mit dem Kathodenraum verbunden. Weitere Alternativen ergeben sich aus den noch folgenden Ausführungsformen mit zwei, z.B. auch verbundenen Protonenreservoirs. Eine Verbindung der Protonenreservoirs ist dabei nicht zwingend notwendig, da an der Anode wiederum auch Protonen produziert werden können, was von der Elektrolytkonzentration abhängt. Für die Freisetzung von Kohlenstoffdioxid muss die Konzentration entsprechend hoch sein.

Es weist das Elektrolysesystem eine erste und eine zweite Membran auf, wobei die erste Membran zwischen Anode und Kathode als Separatormembran angeordnet ist, die zweite Membran zwischen Kathode und Protonenreservoir angeordnet ist und zumindest diese zweite Membran protonendurchlässig ist. Diese Anordnung des Elektrolysesystems ist von Vorteil, da die Verbindung des Protonenreservoirs über die protonendurchlässige Membran mit der Kathode gewährleistet, dass die Protonen direkt an die Reaktionsoberfläche der Kathode geliefert werden. Dazu ist die Kathode bevorzugt porös ausgeführt und in direktem, flächigen Kontakt mit der protonendurchlässigen Membran, welche an das Protonenreservoir anschließt. In diesem Aufbau können beispielsweise Anolyt, Katholyt und Protonenquelle, z.B. eine Säure oder Säuremischung, separat voneinander gewählt und besonders angepasst werden.

In einer weiteren vorteilhaften Ausführungsform der Erfindung ist der Kathodenraum des Elektrolysesystems als Katholytspalt ausgeführt, der sich entlang der Kathode erstreckt und der in seiner Breite, also seinem Ausmaß senkrecht zur Kathodenflächenausdehnung, maximal 5 mm beträgt. Unter einem Katholytspalt ist demnach ein dünner flächig ausgedehnter Hohlraum zwischen der Kathode und einer Membran zu verstehen. Die Membran begrenzt den Katholytspalt dabei beispielsweise gegenüber dem Protonenreservoir oder gegenüber dem Anodenraum oder der Anode. Im Falle einer größeren Spaltbreite als 5 mm spielt das beschriebene pH-Wert-Gefälle im Kathodenraum wieder eine nicht zu vernachlässigende Rolle.

Vorzugsweise ist in dem Elektrolysesystem der Kathodenraum als Katholytspalt ausgeführt, welcher Kathode und protonendurchlässige Membran oder Kathode und erste Membran trennt, und diese jeweils in einem Abstand von maximal 5 mm zueinander angeordnet sind.

In weitergeführten Ausführungsformen des beschriebenen Elektrolysesystems kann der Kathodenraum auch zwei Katholytspalte umfassen, welche beidseitig der Kathode angeordnet sind und jeweils durch eine Membran begrenzt sind, wobei die Kathode und die Membranen jeweils in einem Abstand von maximal 5 mm zueinander angeordnet sind.

So können beidseitig der Kathode Elektrolyseprodukte erzeugt werden. Diese Ausführungsformen haben den Vorzug, dass eine solide Kathode, d.h. z.B. ein Kathodenblech, verwendet werden kann, die Kathode also nicht porös ausgeführt ist. Eine derartige solide Kathode weist vorzugsweise eine nanostrukturierte Oberfläche auf. Im Fall der Ausführungsform mit solider Kathode sind beide Membranen protonendurchlässig ausgeführt um entsprechend den Protonenzugang zu gewährleisten.

Besonders geeignete Ausführungsformen der Erfindung sind demnach durch einen geringen Abstand zwischen protonenleitender Membran und Kathode bzw. zwischen Separatormembran und Kathode im Falle der integrierten Protonenspenderkathode gekennzeichnet: Dieser liegt typischerweise zwischen 0 und 5 mm, bevorzugt zwischen 0,1 und 2 mm. Ein Abstand von 0 mm entspräche einer Polymerelektrolytmembran-(Halb-)Zelle.

In einer alternativen Ausführungsform der Erfindung umfasst das Elektrolysesystem eine Protonenspenderkathode, welche die Protonenspendereinheit und eine darin integrierte protonendurchlässige Kathode umfasst. In diesem Fall ist die Kathode porös, also z.B. als Lochblech-, als Sieb-, als Gitter-, Netz- oder Gewebeelektrode oder, wie eine Gasdiffusionselektrode, aus gepressten Nano- bis Mikropartikeln, gegebenenfalls mit zusätzlichen Membranlagen ausgeführt. Die protonendurchlässige Kathode ist dabei bevorzugt direkt mit der protonendurchlässigen Membran verbunden, z.B. auf diese aufgebracht oder umgekehrt, und bildet somit einen Teil des zweiten Zugangs zum Kathodenraum für die Protonen. In dieser Ausgestaltung treten die Protonen aus dem Protonenreservoir über die gesamte Kathodenfläche in den Kathodenraum ein, also genau an der Stelle im Kathodenraum, an der Phasengrenzfläche zwischen Kathodenoberfläche und Katholyt, an der sie das Kohlenstoffdioxid aus dem Katholyten freisetzen sollen. Gemäß ihrer Funktion und Anordnung wurde diese Variante als Protonenspenderkathode bezeichnet.

Zum einen kann also die protonenspendende Membran der Protonenspendereinheit in unmittelbarer Nähe der Kathode angeordnet sein, zum anderen kann die Kathode in die Protonenspendereinheit mit der protonenspendenden Membran integriert sein.

In dem erfindungsgemäßen Reduktionsverfahren zur Kohlendioxidverwertung mittels eines Elektrolysesystems nach einer der beschriebenen Ausführungsformen wird ein Katholyt-Kohlenstoffdioxid-Gemisch in einen Kathodenraum eingebracht und in Kontakt mit einer Kathode gebracht, es erfolgt in dem Kathodenraum eine lokale pH-Wert-Absenkung des Katholyt-Kohlenstoffdioxid-Gemisches in dem zusätzliche Protonen bereitgestellt werden. Die zusätzlichen Protonen dienen dann zur Erzeugung von reduzierbarem, physikalisch gelöstem oder gasförmigem, aber nicht mehr chemisch gebundenem Kohlenstoffdioxid, wobei die Erzeugung bzw. Freisetzung dieses Kohlenstoffdioxids direkt an der Kathodenreaktionsgrenzfläche erfolgt. Durch diese lokale Kohlenstoffdioxid-Konzentrationserhöhung wird der Umsatz desselben signifikant erhöht.

In einer bevorzugten Ausführungsform der Erfindung wird in dem Reduktionsverfahren die lokale pH-Wert-Absenkung des Katholyt-Kohlenstoffdioxid-Gemisches an der Flüssig-Fest-Phasengrenzfläche vom Katholyt-Kohlenstoffdioxid-Gemisch zur Kathode vorgenommen in dem die zusätzlichen Protonen über die protonendurchlässige Membran oder über die protonendurchlässige Kathode an der Flüssig-Fest-Phasengrenzfläche vom Katholyt-Kohlenstoffdioxid-Gemisch zur Kathode bereitgestellt werden. Dadurch wird eine in situ Kohlenstoffdioxiderzeugung im Phasengrenzbereich aus den im Elektrolyten vorhandenen Anionen Hydrogencarbonat oder Carbonat bewirkt.

In einer weiteren bevorzugten Ausführungsform der Erfindung werden in dem Reduktionsverfahren Protonen aus einem Protonenreservoir, insbesondere einem Säurereservoir, entnommen, welches insbesondere eine Brönstedsäure aufweist, z.B. Schwefelsäure, Phosphorsäure oder Salpetersäure, Salzsäure oder eine organische Säure wie Essigsäure und Ameisensäure.

In einer weiteren vorteilhaften Variante des Reduktionsverfahrens weist der Katholyt Carbonat- und/oder Hydrogencarbonat-Anionen und/oder Dihydrogencarbonat auf. Außerdem weist der Katholyt vorzugsweise Alkalimetall- und/oder Ammoniumionen auf. Alternativ oder zusätzlich weist der Katholyt Sulfat- und/oder Hydrogensulfationen, Phosphat-, Hydrogenphosphat und/oder Dihydrogenphosphationen auf.

Vorzugsweise liegt der pH-Wert des Katholyten in einem Bereich zwischen 4 und 14.

In dem Ausführungsbeispiel, dass eine leitfähige poröse Katalysatorkathode in die Protonenspendereinheit derart integriert ist, dass die Protonen über die protonenleitende Membran und im direkten Anschluss daran durch die Kathode selbst in den Kathodenraum eingebracht werden, kann die protonenleitende Membran beispielsweise von einer Säure hinterspült werden. Die Säurestärke wird dabei vorzugsweise so eingestellt, dass gerade so viel Kohlenstoffdioxid aus dem Katholyten ausgetrieben wird, wie bei vorgegebener Stromdichte an der Kathode reduziert werden kann. Dies hat den besonderen Vorteil, dass dadurch das entstehende Produkt bzw. das Produktgemisch sehr kohlenstoffdioxidarm gewährleistet werden kann.

Die Kathode selbst weist vorzugsweise eine große Oberfläche auf. Im Falle eines Polymerelektrolytmembran(PEM)-Aufbaus ist die Kathode selbst porös ausgeführt, was gleichfalls eine Vergrößerung bzw. Maximierung der reaktiven Oberfläche bedeutet. Vorzugsweise wird als Kathode eine RVC-Elektrode (Reticulated Vitreous Carbon Electrode) eingesetzt. Dies hat den Vorteil, für den Elektrolyten selbst auch durchlässig zu sein und im Gegensatz zu einer Gasdiffusionselektrode keine hydrophoben Bestandteile aufzuweisen. Dies wäre gleichermaßen ein Beispiel für eine bevorzugte Ausführungsform der Erfindung mit Einsatz einer Elektrolysezelle, wie sie in Figur 4 dargestellt ist. In einer

weiteren bevorzugten Ausführungsform wird als Kathode eine Silber-Gasdiffusionselektrode eingesetzt. Wichtig dabei ist, dass diese auch ohne Kohlenstoffanteil ausgeführt sein kann. Eine eingesetzte Silber-Gasdiffusionselektrode umfasst beispielsweise Silber (Ag), Silberoxid ($Ag_2O$) und Polytetrafluorethylen (PTFE, z.B. Teflon).

Die beschriebene Erfindung ermöglicht also die Umwandlung des in Carbonaten und Hydrogencarbonaten chemisch gebundenen Kohlenstoffdioxidanteils zu physikalisch gelöstem Kohlenstoffdioxid bzw. Kohlenstoffdioxidgas, welches die erwünschte Ausgangskomponente für die elektrochemische Kohlenstoffdioxidreduktion darstellt. Damit wird ein Verfahren und ein System beschrieben, welches hohe Kohlenstoffdioxidstoffumsätze mit Stromdichten >> 100 $mA/cm^2$ ermöglicht, ohne dass als Kathode eine Elektrode mit separater Begasung benötigt wird. Eine Gasdiffusionselektrode, wie sie bisher zum Einsatz kommt, könnte in einer erfindungsgemäßen Ausführungsform als zusätzliche Komponente eingeführt werden. Die Phasengrenzschicht zwischen der protonenleitenden Membran der Protonenspendereinheit und dem Katholyten bzw. die Phasengrenzschicht zwischen der Kathodenoberfläche und dem Katholyten dient quasi selbst als Kohlenstoffdioxidquelle. In dieser Phasengrenzschicht geschieht eine lokale pH-Wertänderung bedingt durch die migrierenden Protonen. Die Gleichgewichtsreaktion 1 wird dann so beeinflusst, dass fein verteilte Kohlenstoffdioxidgasblasen an der Membranoberfläche bzw. Kathodenoberfläche durch eine Carbonatzersetzung im sauren Milieu entstehen. Je nach Ausführungsform wird der lokal saure pH-Wert auch durch die brönstedsaure Oberfläche der protonenleitenden Membran bzw. durch die an der Kathodenoberfläche existierenden sauren Sulfonsäuregruppen determiniert. Die Sulfonsäuregruppen kommen aus dem sulfonierten Polytetrafluoroethylen der Membran. Diese enthält beispielsweise Nafion, das ist Teflon, das zusätzlich eine direkte angekoppelte Sulfonsäuregruppe enthält. In Wasser quillt dieses Polymer zu einer Art "festen" Schwefelsäure. Die Kationenleitung erfolgt dann von Sulfonsäuregruppe zu Sulfonsäuregruppe in einer Art Hopping-Transport. Besonders gut können Protonen durch das Nafion geleitet werden, tunneln bzw. hüpfen. Zweiwertige Kationen bleiben eher fest hängen und werden nicht mehr transportiert. Daher spricht man auch von Polymer-Ionentauscher.

Beispiel einer Strukturformel für sulfoniertes Polytetrafluoroethylen:

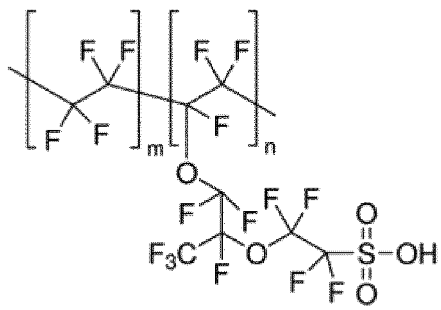

Die Ursache für die Bildung von gasförmigem Kohlenstoffdioxid ist auf eine Neutralisation der durchtretenden Hydroniumionen mittels vorhandener Carbonat- bzw. Hydrogencarbonationen zurückzuführen. Ein stark saurer Elektrolyt, z.B. ein stark saurer Anolyt, kann diesen Effekt zusätzlich verstärken: Im Beispiel, dass der Anodenraum als Protonenreservoir dient, wird von der Anodenseite ein erhöhter Protonendruck auf die Membran erzeugt und verstärkt das Konzentrationsgefälle im Kathodenraum. In diesem Fallbeispiel kann der Anolyt, wie beschrieben, eine Brönstedsäure z.B. Schwefelsäure, Phosphorsäure oder Salpetersäure umfassen.

Im Katholyten werden vorzugsweise Alkalimetall- bzw. Ammoniumionen oder Hydrogencarbonate bzw. Carbonate eingesetzt. Im Verlauf der Kohlenstoffdioxidreduktion kann die Ausgangszusammensetzung des Katholyten, insbesondere dessen Hydrogencarbonat-bzw. Carbonatkonzentration über das Eintragen bzw. Einlösen von Kohlenstoffdioxid wieder hergestellt werden. Ein derartiger Vorgang kann beispielsweise, wie beschrieben, durch den zusätzlichen Einsatz einer Gasdiffusionselektrode realisiert werden.

Vorgestellt wurde also eine protonenspendende Kathode in einer Anordnung zur Kohlenstoffdioxidreduktion, welche ermöglicht, die im Elektrolyten vorliegenden Hydrogencarbonat- und Carbonationen zu Kohlenstoffdioxid umzuwandeln. Mit der vorgestellten Methode kann die Löslichkeitslimitierung von gasförmigem Kohlenstoffdioxid in unmittelbarer Nähe der reaktiven Zentren umgangen werden. Da nur neutrales Kohlenstoffdioxid elektrochemisch reduzierbar ist und nicht dessen chemische Carbonat- und Hydrogencarbonatgleichgewichtsspezies ist dies ein sehr vorteilhafter Ansatz zur Stoffumsatzsteigerung und damit auch zur Erzielung hoher Stromdichten. Zusätzlich kann damit eine Druckbeaufschlagung der Anlage, wie sie z.B. bisher zur Erhöhung der Kohlenstoffdioxidsättigung vorgenommen wurde, vermieden bzw. zusätzlich unterstützt werden.

Die vorgestellte prozessintensivierende Methode für die elektrochemische Reduktion von Kohlenstoffdioxid verbessert den Stoffumsatz pro Elektrodenfläche und pro Stromdichte. Gleichzeitig werden unerwünscht hohe Carbonat- und Hydrogencarbonatkonzentrationen im Elektrolyten, insbesondere im Katholyten verhindert, welche sich negativ auf die physikalische Löslichkeit des Kohlenstoffdioxids auswirken. Das Prinzip einer technisch etablierten Gasdiffusionselektrode kann mit der beschriebenen Methode ersetzt werden. Die Gasdiffusionselektrode kann aber als Add-on dieses neuen beschriebenen Prinzips weiter zum Einsatz kommen, z.B. für die Nachlieferung von Kohlenstoffdioxid in den Elektrolytkreislauf. Besonders geeignet ist die Methode für die Anwendung in den Elektrolysezellen mit externer Kohlenstoffdioxidsättigung.

Eine besonders geeignete Anwendung des beschriebenen Verfahrens liegt in der Aufarbeitung, der bei der basischen Kohlenstoffdioxidpottaschewäsche anfallenden Kaliumhydrogencarbonatlösung im Rahmen einer in situ elektrochemischen Regenerierung des beladenen Absorptionsmittels. Gegenüber der klassischen thermischen Regenerierung bietet die Methode ein enormes Energieeinsparungspotential.

Beispiele und Ausführungsformen der vorliegenden Erfindung werden noch in exemplarischer Weise mit Bezug auf die Figuren 1 bis 9 der angehängten Zeichnung beschrieben:

Figur 1 zeigt ein Hägg-Diagramm für eine 0,05 molare Kohlenstoffdioxidlösung,

Figur 2 zeigt in schematischer Darstellung einen Zweikammer-Aufbau einer Elektrolysezelle,

Figur 3 zeigt in schematischer Darstellung einen Dreikammer-Aufbau einer Elektrolysezelle und

Figur 4 zeigt in schematischer Darstellung einen PEM-Aufbau einer Elektrolysezelle,

Figur 5 zeigt eine Elektrolysezelle im Zweikammer-Aufbau und den charakteristischen pH-Wertanstieg zur Kathode hin,

Figur 6 zeigt in schematischer Darstellung eine Zellanordnung mit zusätzlichem Säurereservoir und poröser Kathode,

Figur 7 zeigt eine Zellanordnung mit zusätzlichem Säurereservoir und zwei Katholytspalten,

Figur 8 zeigt in schematischer Darstellung ein weiteres Beispiel für eine Zellanordnung mit zusätzlichem Säurereservoir und poröser Kathode und

Figur 9 zeigt in schematischer Darstellung eine weitere Ausführungsform einer Zellanordnung mit zusätzlichem Säurereservoir und Elektrolytspalten.

Das in der Figur 1 gezeigte Hägg-Diagramm beinhaltet Werte für eine 0,05 molare Lösung von Kohlenstoffdioxid in Wasser: Die Konzentration C in der Einheit mol/l ist über den pH-Wert aufgetragen. Die Protonenkonzentration ($H^+$) sinkt ab einem pH-Wert > 0 von 1 auf einen Wert von $10^{-10}$ mol/l bei einem pH-Wert von 10 ab, während die $OH^-$ Ionenkonzentration entsprechend der pH-Wertdefinition ansteigt. Liegt im sauren Milieu also bis zum pH-Wert von in etwa 4 noch eine nahezu pH-wertunabhängige Kohlenstoffdioxidkonzentration ($CO_2$) von 0,05 mol/l vor, sinkt diese ab einem pH-Wert von 5 signifikant ab zugunsten eines Anstiegs der Hydrogencarbonationen ($HCO_3^-$), die ihre höchste Konzentration in einem pH-Wertbereich zwischen 8 und 9 haben. Im basischen Milieu bei sehr hohen pH-Werten > 12 liegt das Kohlenstoffdioxid überwiegend in Form von Carbonationen ($CO_3^{2-}$) in der Lösung vor.

Die in den Figuren 2 bis 4 schematisch dargestellten gängigen Aufbauten von Elektrolysezellen 2, 3, 4 umfassen wenigstens eine Anode A in einem Anodenraum AR sowie eine Kathode K in einem Kathodenraum KR. In jedem der Fälle sind Anodenraum AR und Kathodenraum KR wenigstens durch eine Membran $M_1$ voneinander getrennt. Diese Membran M1 sorgt vorzugsweise für die Trennung der gasförmigen Produkte G1 und Produkte P1 bzw. verhindert eine Vermischung. Eine definierende Größe für die Membran M1 ist dabei der sogenannte Bubble-Point. Dieser beschreibt, ab welchem Druckunterschied $\Delta P$ zwischen den zwei Seiten der Membran M1 ein Gasfluss durch die Membran M1 stattfinden würde. Vorzugsweise wird also eine Membran M1 mit einem hohen Bubble-Point von 10 mbar oder größer eingesetzt. Dabei kann die Membran $M_1$ eine ionenleitende Membran, zum Beispiel eine Anionen-leitende Membran oder eine Kationenleitende Membran sein. Es kann sich bei der Membran um eine poröse Schicht oder ein Diaphragma handeln. Letztlich kann man unter der Membran M1 auch einen ionenleitenden räumlichen Separator verstehen, der Elektrolyte in Anoden- und Kathodenraum AR, KR trennt. Je nach verwendeter Elektrolytlösung E wäre auch ein Aufbau ohne Membran $M_1$ denkbar. Anode A und Kathode K sind jeweils elektrisch mit einer Spannungsversorgung verbunden. Der Anodenraum AR einer jeden der gezeigten Elektrolysezellen 2, 3, 4 ist jeweils mit einem Elektrolyteinlass 21, 31, 41 ausgestattet. Ebenso umfasst jeder abgebildete Anodenraum AR einen Elektrolytauslass 23, 33, 43 über den der Elektrolyt E sowie an der Anode A gebildete Elektrolyseprodukte G1, z.B. Sauerstoffgas $O_2$ aus dem Anodenraum AR ausströmen können. Die jeweiligen Kathodenräume KR weisen jeweils wenigstens einen Elektrolyt- und Produktauslass 24, 34, 44 auf. Dabei kann das Gesamtelektrolyseprodukt P1 aus einer Vielzahl von Elektrolyseprodukten zusammengesetzt sein.

Während im Zweikammer-Aufbau 2 Anode A und Kathode K durch Anodenraum AR und Kathodenraum KR von der Membran $M_1$ getrennt angeordnet sind, liegen die Elektroden in einem sogenannten Polymerelektrolytmembran-Aufbau(PEM) 4 mit porösen Elektroden direkt an der Membran $M_1$ an. Wie in Figur 4 gezeigt, handelt es sich dann um eine poröse Anode A und um eine poröse Kathode K. Im Zweikammer-Aufbau 2 sowie im PEM-Aufbau 4 wird der Elektrolyt und das Kohlenstoffdioxid $CO_2$ bevorzugt über einen gemeinsamen Edukteinlass 22, 42 in den Kathodenraum KR eingebracht.

Unterschiedlich dazu, wie in Figur 3 gezeigt, wird bei einem sogenannten Drei-Kammer-Aufbau 3, bei dem der Kathodenraum KR einen Elektrolyteinlass 32 aufweist, separat davon das Kohlenstoffdioxid $CO_2$ über die in diesem Fall zwingend porös ausgeführte Kathode K in den Kathodenraum KR eingeströmt. Bevorzugt ist die poröse Kathode K als Gasdiffusionselektrode GDE, ausgestaltet. Eine Gasdiffusionselektrode GDE ist dadurch charakterisiert, dass eine flüssige Komponente, z.B. ein Elektrolyt, sowie eine gasförmige Komponente, z.B. ein Elektrolyseedukt, in einem Porensystem der Elektrode, z.B. der Kathode K, in Kontakt miteinander gebracht werden können. Das Porensystem der Elektrode ist dabei so ausgeführt, dass die flüssige sowie die gasförmige Phase gleichermaßen in das Porensystem eindringen können und darin gleichzeitig vorliegen können. Typischerweise ist dazu ein Reaktionskatalysator porös ausgeführt und übernimmt die Elektrodenfunktion, oder eine poröse Elektrode weist katalytisch wirkende Komponenten auf. Zur Einbringung des Kohlenstoffdioxids $CO_2$ in den Katholytkreislauf umfasst die Gasdiffusionselektrode GDE einen Kohlenstoffdioxideinlass 320.

Die Erfindung könnte beispielsweise in einem der bisher bekannten Elektrolysezellaufbauten, wie z. B. in den Figuren 2 und 3 dargestellt, umgesetzt werden, wenn diese mit einer entsprechenden Protonenspendereinheit versehen würden. Der in Figur 4 dargestellte Aufbau benötigte für die Umsetzung der Erfindung konkretere Modifikationen, wie beispielsweise Transportkanäle für den Elektrolyten durch die Kathode, um einen Membran-Elektrolytkontakt herzustellen. Vorzugsweise fände in diesen Transportkanälen die Kohlenstoffdioxid-Entwicklung beziehungsweise Freisetzung statt. Analog bedarf es auf der Anodenseite Transportkanäle für den Anolyten zur Membran um damit die Protonen zur Verfügung zu stellen. Mittels einem derartigen Polymerelektrolytaufbau mit porösen Elektroden mit Transportkanälen kann ein sehr vorteilhafter Fall realisiert werden, in dem nahezu genau so viel Kohlenstoffdioxid erzeugt wird, wie dann auch an der Kathode reduziert wird. Damit kann im Gegensatz zur Gasdiffusionselektrode, wie bisher im Stand der Technik beschrieben, zu besonders hoch angereicherten Produkten gelangt werden. Die aus dem Stand der Technik bekannten Elektrolysezellen können für den Einsatz gemäß der Erfindung auch so modifiziert werden, dass sie zu gemischten Varianten kombiniert werden. Beispielsweise kann ein Anodenraum als Polymerelektrolytmembran-Halbzelle ausgeführt sein, während ein Kathodenraum aus einer Halbzelle besteht, mit Kathodenraum zwischen Membran und Kathode, wie in den Figuren 2 und 3 gezeigt.

Figur 5 zeigt schematisch den Aufbau einer Elektrolysezelle 5 mit einem Anodenraum AR zwischen einer Anode A und einer Membran M1 sowie einem Kathodenraum KR zwischen der Membran M1 und der Kathode K. Anode A und Kathode K sind über eine Spannungsversorgung miteinander verbunden. Durch einen Pfeil vom Anodenraum AR in den Kathodenraum KR durch die Membran M1 hindurch ist angezeigt, dass diese zumindest für eine Ladungsträgersorte ionenleitend ist, bevorzugt zumindest für Kationen $X^+$, wobei dies je nach verwendetem Anolyten verschiedene Metallkationen $X^+$ sein können, sowie für Protonen $H^+$. Der Kathodenraum KR weist eine Breite $d_{MK}$ auf, d.h. einen Abstand zwischen Membran M1 und Kathode K. Dabei sind die Membran M1 und die Kathode K in der Elektrolysezelle 5 so angeordnet, dass deren sich im Kathodenraum KR zugewandte Oberflächen planparallel zueinander verlaufen. Durch ein Steigungsdreieck ist das pH-Wert-Gefälle im Kathodenraum KR angezeigt: Der pH-Wert steigt von einer lokal sauren Umgebung nahe der Membran M1 zu einer lokal basischen Umgebung nahe der Kathodenoberfläche K an. Der lokal saure Bereich ist mit I bezeichnet und durch eine gestrichelte Linie parallel zu M1 dargestellt, entsprechend ist mit II und der gestrichelten Linie vor der Kathode K der im Kathodenraum KR lokal basische Bereich gezeigt. Der Anodenraum AR wird gleichermaßen sauer, wie der Kathodenraum KR basisch.

Mit einem erneuten Blick auf die Gleichgewichtsreaktion 1 erklärt sich das pH-Wert-Gefälle folgendermaßen: Die auf den unterschiedlichen Seiten der Membran M1 vorliegenden und entstehenden Anionen und Kationen können migrieren, im Elektrolyten E sowie durch die Membran M1 hindurch. Durch die an der Anode A zur Verfügung gestellten Elektronen wird beispielsweise in einem wässrigen Elektrolyten E das Wasser zu $H^+$-Ionen und Sauerstoffgas $O_2$ umgesetzt. Liegt beispielsweise Kohlenstoffdioxid $CO_2$ als Hydrogencarbonat $HCO_3^-$ chemisch gebunden im Anolyten und/oder Katholyten vor, kann dieses mit den Protonen $H^+$ zu Kohlenstoffdioxidgas $CO_2$ und Wasser $H_2O$ weiter reagieren. Der Katholyt umfasst vorzugsweise Alkalimetall- und/oder Ammoniumionen bzw. deren Hydrogencarbonate oder Carbonate. Bei der Reaktion von Hydrogencarbonat $HCO_3^-$ zu Kohlenstoffdioxid $CO_2$ spricht man von der sauren Zersetzung von Hydrogencarbonat $HCO_3^-$. Im basischen Milieu, d.h. bei einem pH-Wert zwischen 6 und 9, wird Hydrogencarbonat $HCO_3^-$ gebildet, d.h. dann läuft die Gleichgewichtsreaktion Gl. 1 zur anderen Seite hin ab. Wird also nun in einer Elektrolysezelle 5 als Anolyt sowie als Katholyt beispielsweise eine Kaliumhydrogencarbonat-Lösung eingesetzt, so bildet sich das in der Figur 5 gezeigte pH-Wert-Gefälle von einer lokal sauren Umgebung I in der Phasengrenzschicht zwischen M1 und Katholyt, in welcher bevorzugt die Kohlenstoffdioxid-Freisetzung erfolgt. An der Kathodenoberfläche bzw. in der Phasengrenzschicht II, zwischen Kathodenoberfläche und Katholyt ist der pH-Wert aufgrund der Ionenmigration jedoch schon wieder so hoch z.B. in einem Bereich zwischen 6 und 9, dass die Reaktion von der Kaliumhydrogencarbonat-Bildung überwiegt und somit nur wenig physikalisch gebundenes Kohlenstoffdioxid $CO_2$ in der Elektrolytlösung E zur Reduktion an der Kathode K zur Verfügung steht.

Der Abstand $d_{mk}$ muss demnach derart minimal gewählt werden, dass die als Kohlenstoffdioxidquelle fungierende Phasengrenzschicht I zwischen Membran M1 und Katholyt an die Phasengrenzschicht II zwischen Kathodenoberfläche K und Katholyt anstößt bzw. mit dieser überlappt oder übereinstimmt, so dass an der Reaktionsgrenzfläche der Kathode K genügend freigesetztes Kohlenstoffdioxid $CO_2$ bereitgestellt bzw. nachgeliefert wird.

In den Figuren 6 bis 9 sind bevorzugte Ausführungsformen von Elektrolysezellen gemäß der Erfindung gezeigt. Diese sind grundsätzlich nach dem Polymer-Elektrolyt-Membran-Aufbau (PEM), bzw. Polymer-Elektrolyt-Membran-Halbzellenaufbau konzipiert. Zum einen kann die protonenspendende Membran der Protonenspendereinheit in unmittelbarer Nähe der Kathode angeordnet sein, wie in den Figuren 7 und 9 zu finden ist, zum anderen kann die Kathode in die Protonenspendereinheit mit der protonenspendenden Membran integriert sein, wie durch die Figuren 6 und 8 beispielhaft gezeigt ist.

Die Polymer-Elektrolyt-Membran (PEM) wird häufig auch Protonen-Austausch-Membran (Proton Exchange Membrane) genannt und ist eine semipermeable Membran. Diese Membranen sind bevorzugt für Kationen, wie Protonen $H^+$, Lithium- $Li^+$, Natrium- $Na^+$ oder Kalium-Kationen $K^+$ durchlässig, während der Transport von Gasen wie beispielsweise Sauerstoff $O_2$ oder Wasserstoff $H_2$ verhindert wird. Diesen Zweck erfüllt die Membran $M_1$ z.B. bei der Trennung der Produkte P1, G1 der Anoden- und Kathodenreaktion. In den meisten Fällen können wässrige Flüssigkeiten durch die PEM hindurchtreten, wenn auch die Kapillarkräfte diesen Transport hemmen. Eine Polymer-Elektrolyt-Membran kann beispielsweise aus einem Ionomer, reinen Polymer- oder aus Kompositmembranen hergestellt werden, bei denen andere Materialien in eine Polymermatrix eingebettet werden. Ein Beispiel für eine kommerziell erhältliche Polymer-Elektrolyt-Membran ist Nafion von DuPont.

Allen Aufbauten gleich ist die Abfolge von linksseitig einem Anodenraum AR, welcher durch eine Anode A und eine, auf der dem Anodenraum AR abgewandten Seite der Anode A aufliegenden Membran M1 vom Kathodenraum KR separiert ist. An den Kathodenraum KR schließt die Kathode K und daran die Protonenspendereinheit in unterschiedlichen Ausführungen an. Mit Pfeilen sind die Edukt- und Elektrolyteingänge E in den Anodenraum AR und Kathodenraum KR sowie die Auslässe für Elektrolyt- E und Produktgemische P1, G1 angezeigt. Die Membran M1 dient überwiegend als Separatormembran, kann aber auch protonendurchlässig sein, wie es beispielsweise für die Ausführungsform mit anodenseitigem, zusätzlichem Säurereservoir PR1 erforderlich ist. Das kathodenseitige Säure- bzw. Protonenreservoir PR ist in allen Fällen durch eine protonenleitende Membran M2 von der Kathode K abgetrennt. Die Kathode K liegt in den Figuren 7 und 9 zwischen zwei Katholytspalten KS oder als Protonenspenderkathode PSK in die Protonenspendereinheit integriert. In den Fällen der Zellanordnung wie in den Figuren 6 und 8 gezeigt, ist die poröse Kathode K nicht nur protonendurchlässig, sondern bevorzugt auch elektrolytdurchlässig ausgeführt, sodass die Kohlenstoffdioxidfreisetzung an einer sehr großen Kathodenoberfläche, z. B. innerhalb von Elektrolytkanälen, in der Kathode K geschehen kann. In den Beispielen mit solider Kathode K und einem sehr engen Kathodenraum, welcher vielmehr als Katholytspalt KS zu bezeichnen ist, aufgrund seiner geringen Ausdehnung zwischen der reaktiven Fläche und der Membranoberfläche M2, über welche bevorzugt die Protonen $H^+$ angeboten werden, kann die Kathode K aus einem soliden Blech gebildet sein, kann aber auch eine vorteilhafte Nanostrukturierung zur Oberflächenvergrößerung aufweisen. Im Falle der Aufteilung des Kathodenraums KR in zwei Katholytspalte KS, wie in den Figuren 7 und 9 gezeigt, kann die an der Kathode K vorbeifließende Säure den Anolyten bilden, da auf der Anodenseite dann z.B. durch Wasseroxidation Protonen $H^+$ erzeugt werden. In den Figuren 8 und 9 ist explizit der Anodenraum AR als zusätzliches Protonenreservoir PR1 ausgeführt und als Anolyt wird eine Säure eingesetzt. In diesen Fällen können die beiden Protonen- bzw. Säurereservoirs PR, PR1 über ein Kreislaufsystem (Kreislauf in den Figuren 8 und 9 nicht dargestellt) miteinander verbunden sein. Die in den Figuren 7 und 9 gezeigten Katholytspalte KS betragen eine Breite, beispielsweise zwischen 0 und 5 mm, vorteilhafterweise zwischen 0,1 und 1 mm, bevorzugt zwischen 0,1 und 0,5 mm. In den in Figuren 8 und 9 dargestellten Fällen kann die Separatormembran M1 protonenleitend ausgeführt sein, zumindest wird eine Membran M1 eingesetzt, die einen Ladungsausgleich gewährleistet.

Für die in den Figuren 6 und 9 dargestellten Fälle mit Protonenspenderkathode PSK und Kathodenraum KR ist es jedoch wichtig, den Kathodenraum KR nicht beliebig zu verengen und zu einem Kathodenspalt KS zu reduzieren: In diesen Fällen ist sogar ein Mindestabstand $b_{KR}$ zwischen Separatormembran M1 und Protonenspenderkathode PSK notwendig, da die durchtretenden Hydroniumionen bei zu geringem Elektrolytvolumen zwischen Separatormembran M1 und Kathode K sonst an der Katalysatorgrenzfläche vorrangig zu Wasserstoff $H_2$ umgewandelt würden und somit keine Kohlenstoffdioxidreduktion stattfinden könnte. Die in den Kathodenraum KR eingetretenen Protonen $H^+$ müssen zunächst für die Kohlenstoffdioxidbildung sorgen und dürfen nicht direkt zu Wasserstoff $H_2$ umgesetzt werden. Der Mindestabstand $b_{KR}$ für den Kathodenraum KR bei einer Zellanordnung 6, 8 mit Protonenspenderkathode PSK beträgt 1 mm. Vorzugsweise beträgt der Abstand $b_{KR}$ zwischen Separatormembranoberfläche M1 und Katalysatoroberfläche K zwischen 1 und 10 mm, bevorzugt nicht mehr als 5 mm, vorteilhafterweise nicht mehr als 2 mm.

Mittels der Erfindung kann demnach die absolute Kohlenstoffdioxidkonzentration der Flüssigphase aber vor

allem die lokale Verfügbarkeit des physikalisch gelösten Kohlenstoffdioxids in unmittelbarer Nähe der Elektrodenoberfläche eingestellt werden. Makrokinetische Stofftransportvorgänge spielen bei der erfindungsgemäßen Anordnung eine nur untergeordnete Rolle, da das zur elektrochemischen Reduktion benötigte Kohlenstoffdioxid aus den Anionen des Elektrolyten quasi durch insitu-Protonierung an der Reaktionsoberfläche zur Verfügung gestellt wird.

**Patentansprüche**

1. Elektrolysesystem zur Kohlenstoffdioxid-Verwertung, umfassend eine Elektrolysezelle (6, 7, 8, 9) mit einer Anode (A) in einem Anodenraum (AR), einer Kathode (K) in einem Kathodenraum (KR) und einer ersten und einer zweiten Membran (M1, M2), wobei der Kathodenraum (KR) einen ersten Zugang für Kohlenstoffdioxid ($CO_2$) aufweist und ausgestaltet ist das zugegangene Kohlenstoffdioxid ($CO_2$) in Kontakt mit der Kathode (K) zu bringen, wobei das Elektrolysesystem eine Protonenspender-Einheit umfasst und der Kathodenraum (KR) über einen zweiten Zugang für Protonen ($H^+$) mit der Protonenspender-Einheit verbunden ist, welcher ausgestaltet ist die dem Kathodenraum (KR) zugegangenen Protonen ($H^+$) in Kontakt mit der Kathode (K) zu bringen, wobei die Protonenspender-Einheit ein Protonenreservoir (PR) und eine protonendurchlässige Membran (M2) umfasst, die als zweiter Zugang zum Kathodenraum (KR) für die Protonen ($H^+$) fungiert, wobei die erste Membran (M1) zwischen Anode (A) und Kathode (K) angeordnet ist, die zweite Membran (M2) zwischen Kathode (K) und einem Protonenreservoir (PR) angeordnet ist und zumindest die zweite Membran (M2) protonendurchlässig ist.

2. Elektrolysesystem nach Anspruch 1, wobei das Protonenreservoir (PR) ein Säurereservoir ist, welches insbesondere eine Brönstedsäure (HX) aufweist.

3. Elektrolysesystem nach einem der vorstehenden Ansprüche 1 oder 2, wobei die protonendurchlässige Membran (M2) sulfoniertes Polytetrafluorethylen aufweist.

4. Elektrolysesystem nach einem der vorstehenden Ansprüche, wobei der Kathodenraum (KR) ein Katholyt-Kohlenstoffdioxid-Gemisch aufweist, wobei der Katholyt Carbonat- ($CO_3^{2-}$) und/oder Hydrogencarbonat-Anionen ($HCO_3^-$) und/oder Dihydrogencarbonat ($H_2CO_3$) umfasst.

5. Elektrolysesystem nach einem der vorstehenden Ansprüche, wobei der Anodenraum (AR) als zusätzliches Protonenreservoir (PR1) fungiert.

6. Elektrolysesystem nach einem der vorstehenden Ansprüche, wobei der Kathodenraum (KR) als Katholytspalt (KS) ausgeführt ist, der sich entlang der Kathode (K) erstreckt und der in seinem Ausmaß senkrecht zur Kathodenflächenausdehnung, maximal 5 mm beträgt.

7. Elektrolysesystem nach Anspruch 6, wobei der Kathodenraum (KR) als Katholytspalt (KS) ausgeführt ist, der Kathode (K) und Membran (M1, M2) trennt, wobei Kathode (K) und Membran (M1) in einem Abstand von maximal 5 mm zueinander angeordnet sind.

8. Elektrolysesystem nach Anspruch 7, wobei der Kathodenraum (KR) zwei Katholytspalte (KS) umfasst, welche beidseitig der Kathode (K) angeordnet sind und jeweils durch eine Membran (M1, M2) begrenzt sind, wobei Kathode (K) und Membranen (M1, M2) jeweils unabhängig in einem Abstand von maximal 5 mm zueinander angeordnet sind.

9. Elektrolysesystem nach einem der vorstehenden Ansprüche 1 bis 6 mit einer Protonenspender-Kathode (PSK), welche die Protonenspender-Einheit und eine darin integrierte protonendurchlässige Kathode (KP), welche porös ist, umfasst.

10. Reduktionsverfahren zur Kohlenstoffdioxid-Verwertung mittels eines Elektrolysesystems nach einem der vorstehenden Ansprüche,
bei dem ein Katholyt-Kohlenstoffdioxid-Gemisch in einen Kathodenraum (KR) eines Elektrolysesystems nach einem der vorstehenden Ansprüche eingebracht und in Kontakt mit einer Kathode (K) gebracht wird,
und bei dem im Kathodenraum (KR) eine lokale pH-Wert-Absenkung des Katholyt-Kohlenstoffdioxid-Gemisches vorgenommen wird indem zusätzliche Protonen ($H^+$) bereitgestellt werden.

11. Reduktionsverfahren nach Anspruch 10, bei dem die lokale pH-Wert-Absenkung des Katholyt-Kohlenstoffdioxid-Gemisches an der Flüssig-Fest-Phasengrenzfläche vom Katholyt-Kohlenstoffdioxid-Gemisch zur Kathode (K) vorgenommen wird indem die zusätzlichen Protonen ($H^+$) über die protonendurchlässige Membran (M2) oder über eine protonendurchlässige Kathode (KP) an der Flüssig-Fest-Phasengrenzfläche vom Katholyt-Kohlenstoffdioxid-Gemisch zur Kathode (K) bereitgestellt werden.

**12.** Reduktionsverfahren nach Anspruch 10 oder 11, bei dem die Protonen ($H^+$) dem Protonenreservoir (PR), insbesondere einem Säurereservoir entnommen werden, welches insbesondere eine Brönstedsäure (HX) aufweist, z.B. Schwefelsäure ($H_2SO_4$), Phosphorsäure ($H_3PO_4$) oder Salpetersäure ($HNO_3$), Salzsäure (HCl), oder organische Säuren, wie Essigsäure und Ameisensäure.

**13.** Reduktionsverfahren nach einem der vorstehenden Ansprüche 10 bis 12, bei dem der Katholyt Carbonat- ($CO_3^{2-}$) und/oder Hydrogencarbonat-Anionen ($HCO_3^-$) aufweist.

## Claims

**1.** Electrolysis system for carbon dioxide utilization, comprising an electrolysis cell (6, 7, 8, 9) having an anode (A) in an anode space (AR), a cathode (K) in a cathode space (KR) and a first membrane and a second membrane (M1, M2), wherein the cathode space (KR) has a first feed for carbon dioxide ($CO_2$) and is configured to bring the carbon dioxide ($CO_2$) fed in into contact with the cathode (K), wherein the electrolysis system comprises a proton donor unit and the cathode space (KR) is connected to the proton donor unit via a second feed for protons ($H^+$) which is configured to bring the protons ($H^+$) fed into the cathode space (KR) into contact with the cathode (K), wherein the proton donor unit comprises a proton reservoir (PR) and a proton-permeable membrane (M2) which functions as a second feed to the cathode space (KR) for the protons ($H^+$), wherein the first membrane (M1) is arranged between the anode (A) and cathode (K), the second membrane (M2) is arranged between the cathode (K) and proton reservoir (P), and at least the second membrane (M2) is proton-permeable.

**2.** Electrolysis system according to Claim 1, wherein the proton reservoir (PR) is an acid reservoir, especially comprising a Brønsted acid (HX).

**3.** Electrolysis system according to either of the preceding Claims 1 and 2, wherein the proton-permeable membrane (M2) includes sulfonated polytetrafluoroethylene.

**4.** Electrolysis system according to any of the preceding claims, wherein the cathode space (KR) includes a catholyte/carbon dioxide mixture, wherein the catholyte comprises carbonate ($CO_3^{2-}$) and/or hydrogencarbonate anions ($HCO_3^-$) and/or dihydrogencarbonate ($H_2CO_3$).

**5.** Electrolysis system according to any of the preceding claims, wherein the anode space (AR) functions as an additional proton reservoir (PR1).

**6.** Electrolysis system according to any of the preceding claims, wherein the cathode space (KR) is executed as a catholyte gap (KS) that extends along the cathode (K) and has an extent at right angles to the surface area of the cathode of not more than 5 mm.

**7.** Electrolysis system according to Claim 6, wherein the cathode space (KR) is executed as a catholyte gap (KS) which separates the cathode (K) and membrane (M1, M2), wherein cathode (K) and membrane (M1) are arranged at a distance of not more than 5 mm from one another.

**8.** Electrolysis system according to Claim 7, wherein the cathode space (KR) comprises two catholyte gaps (KS) arranged on either side of the cathode (K), each of which is bounded by a membrane (M1, M2), wherein the cathode (K) and membranes (M1, M2) are each independently arranged at a maximum distance of 5 mm from one another.

**9.** Electrolysis system according to any of the preceding Claims 1 to 6, having a proton donor cathode (PSK) comprising the proton donor unit and a porous proton-permeable cathode (KP) integrated therein.

**10.** Reduction method for carbon dioxide utilization by means of an electrolysis system according to any of the preceding claims,
in which a catholyte/carbon dioxide mixture is introduced into a cathode space (KR) of an electrolysis system according to any of the preceding claims and brought into contact with a cathode (K),

and in which local lowering of the pH of the catholyte/carbon dioxide mixture is undertaken in the cathode space (KR) by providing additional protons ($H^+$).

11. Reduction method according to Claim 10, in which the local lowering of the pH of the catholyte/carbon dioxide mixture is undertaken at the liquid/solid phase interface from the catholyte/carbon dioxide mixture to the cathode (K) by providing the additional protons ($H^+$) via the proton-permeable membrane (M2) or via a proton-permeable cathode (KP) at the liquid/solid phase interface from the catholyte/carbon dioxide mixture to the cathode (K).

12. Reduction method according to Claim 10 or 11, in which the protons ($H^+$) are taken from the proton reservoir (PR), especially an acid reservoir which especially comprises a Brønsted acid (HX), e.g. sulfuric acid ($H_2SO_4$), phosphoric acid ($H_3PO_4$) or nitric acid ($HNO_3$), hydrochloric acid (HCl), or organic acids such as acetic acid and formic acid.

13. Reduction method according to any of the preceding Claims 10 to 12, in which the catholyte includes carbonate ($CO_3^{2-}$) and/or hydrogencarbonate anions ($HCO_3^-$).

**Revendications**

1. Système d'électrolyse pour la valorisation du dioxyde de carbone, comprenant une cellule (6, 7, 8, 9) d'électrolyse ayant une anode (A) dans un compartiment (AR) anodique, une cathode (K) dans un compartiment (KR) cathodique, une première et une deuxième membranes (M1, M2), le compartiment (KR) cathodique ayant un premier accès pour du dioxyde de carbone ($CO_2$) et étant conformé pour mettre le dioxyde de carbone ($CO_2$) ayant accédé en contact avec la cathode (K), le système d'électrolyse comprenant une unité donneuse de protons et le compartiment (KR) cathodique communiquant, par un deuxième accès pour des protons ($H^+$), avec l'unité donneuse de protons, qui est conformé pour mettre les protons ($H^+$), ayant accédé au compartiment (KR) cathodique, en contact avec la cathode (K), l'unité donneuse de protons comprenant un réservoir (PR) de protons et une membrane (M2) perméable aux protons, qui sert de deuxième accès au compartiment (KR) cathodique pour les protons ($H^+$), la première membrane (M1) étant disposée entre l'anode (A) et la cathode (K), la deuxième membrane (M2) étant disposée entre la cathode (K) et un réservoir (PR) de protons et au moins la deuxième membrane (M2) est perméable aux protons.

2. Système d'électrolyse suivant la revendication 1, dans lequel le réservoir (PR) de protons est un réservoir d'acide, qui a notamment un acide (HX) de Brönsted.

3. Système d'électrolyse suivant l'une des revendications 1 ou 2 précédentes, dans lequel la membrane (M2) perméable aux protons a du polytétrafluoroéthylène sulfoné.

4. Système d'électrolyse suivant l'une des revendications précédentes,
dans lequel le compartiment (KR) cathodique a un mélange de catholyte-dioxyde de carbone, le catholyte comprenant des anions carbonates ($CO_3^{2-}$) et/ou des anions bicarbonates ($HCO_3$-) et/ou de l'acide carbonique ($H_2CO_3$).

5. Système d'électrolyse suivant l'une des revendications précédentes, dans lequel le compartiment (AR) cathodique sert de réservoir (PR1) supplémentaire de protons.

6. Système d'électrolyse suivant l'une des revendications précédentes,
dans lequel le compartiment (KR) cathodique est réalisé en colonne (KS) de catholyte qui s'étend le long de la cathode (K) et dont la dimension perpendiculaire à l'étendue de la surface de la cathode est au maximum de 5 mm.

7. Système d'électrolyse suivant la revendication 6, dans lequel le compartiment (KR) cathodique est réalisé en colonne (KS) de catholyte, qui sépare la cathode (K) et la membrane (M1, M2), la cathode (K) et la membrane (M1) étant disposées à une distance l'une de l'autre de 5 mm au maximum.

8. Système d'électrolyse suivant la revendication 7, dans lequel le compartiment (KR) cathodique comprend deux colonnes (KS) de catholyte, qui sont disposées de part et d'autre de la cathode (K) et sont délimitées chacune par une membrane (M1, M2), la cathode (K) et les membranes (M1, M2) étant disposées l'une par rapport à l'autre indépendamment à une distance de 5 mm au maximum.

9. Système d'électrolyse suivant l'une des revendications 1 à 6, précédentes, comprenant un donneur de protons-cathode (PSK), qui comprend l'unité donneuse de protons et une cathode (KP) perméable aux protons, qui y est intégrée et qui est poreuse.

**10.** Procédé de réduction pour la valorisation du dioxyde de carbone au moyen d'un système d'électrolyte suivant l'une des revendications précédentes,
dans lequel on introduit un mélange de catholyte et de dioxyde de carbone dans un compartiment (KR) cathodique d'un système d'électrolyse suivant l'une des revendications précédentes et on le met en contact avec une cathode (K) et dans lequel on effectue dans le compartiment (KR) cathodique une diminution locale du pH du mélange catholyte-dioxyde de carbone en mettant à disposition des protons ($H^+$) supplémentaires.

**11.** Procédé de réduction suivant la revendication 10, dans lequel on effectue la diminution locale du pH du mélange catholyte-dioxyde de carbone sur la surface limite de phase liquide-solide du mélange de catholyte-dioxyde de carbone à la cathode (K), en mettant à disposition les protons ($H^+$) supplémentaires par la membrane (M2) perméable aux protons ou par une cathode (KP) perméable aux protons à la surface limite de phase liquide-solide du mélange catholyte-dioxyde de carbone à la cathode (K).

**12.** Procédé de réduction suivant la revendication 10 ou 11, dans lequel on prélève les protons ($H^+$) du réservoir (PR) de protons, notamment d'un réservoir d'acide, qui a, notamment, un acide (HX) de Brönsted, par exemple de l'acide sulfurique ($H_2SO_4$), de l'acide phosphorique ($H_3PO_4$) ou de l'acide nitrique ($HNO_3$), de l'acide chlorhydrique (HCl) ou des acides organiques, comme de l'acide acétique ou de l'acide formique.

**13.** Procédé de réduction suivant l'une des revendications précédentes, dans lequel le catholyte a des anions carbonates ($CO_3^{2-}$) et/ou des anions bicarbonates ($HCO_3^-$).

FIG 1

Stand der Technik

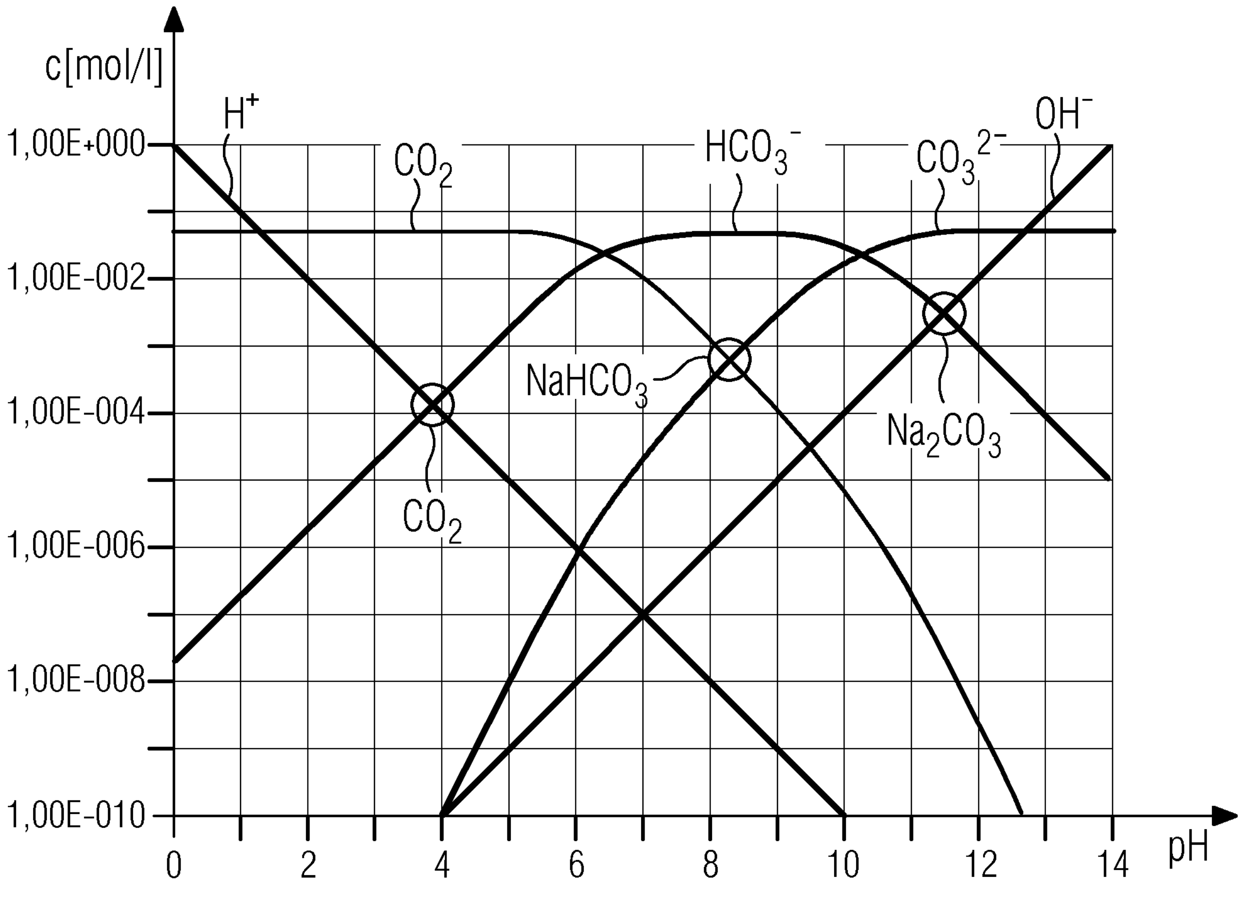

FIG 2

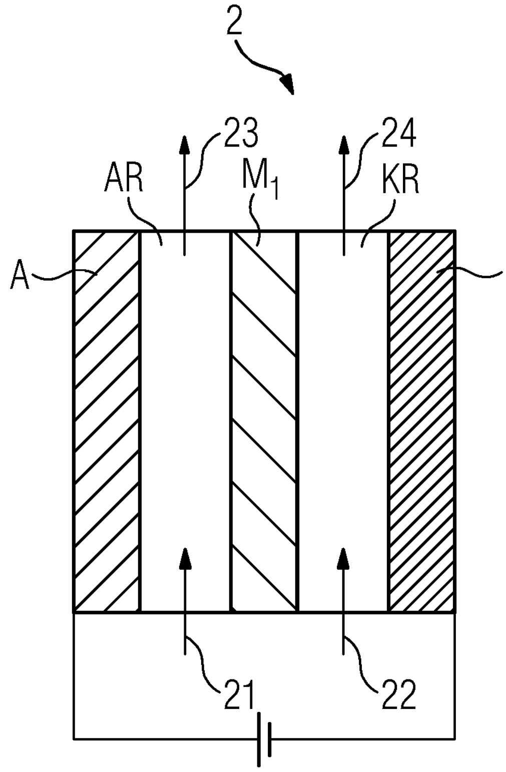


FIG 3

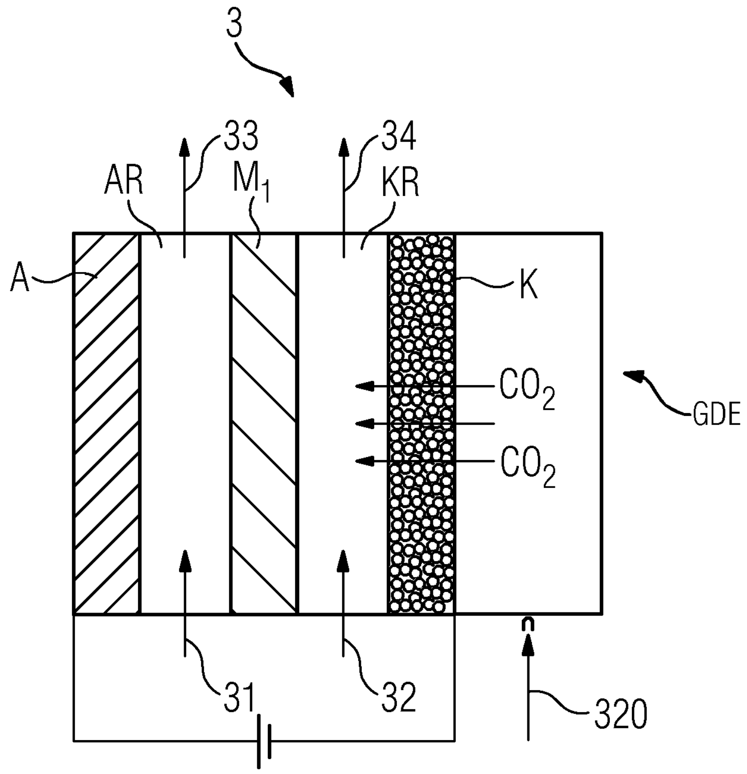

FIG 4

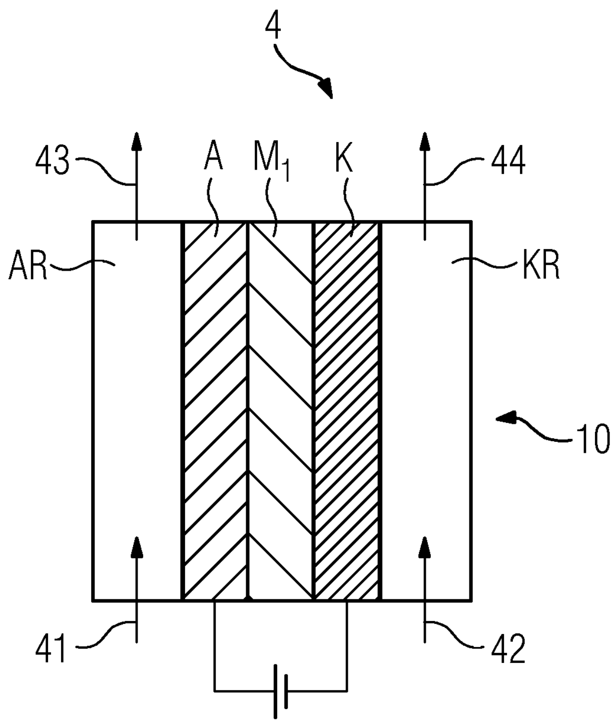


FIG 5

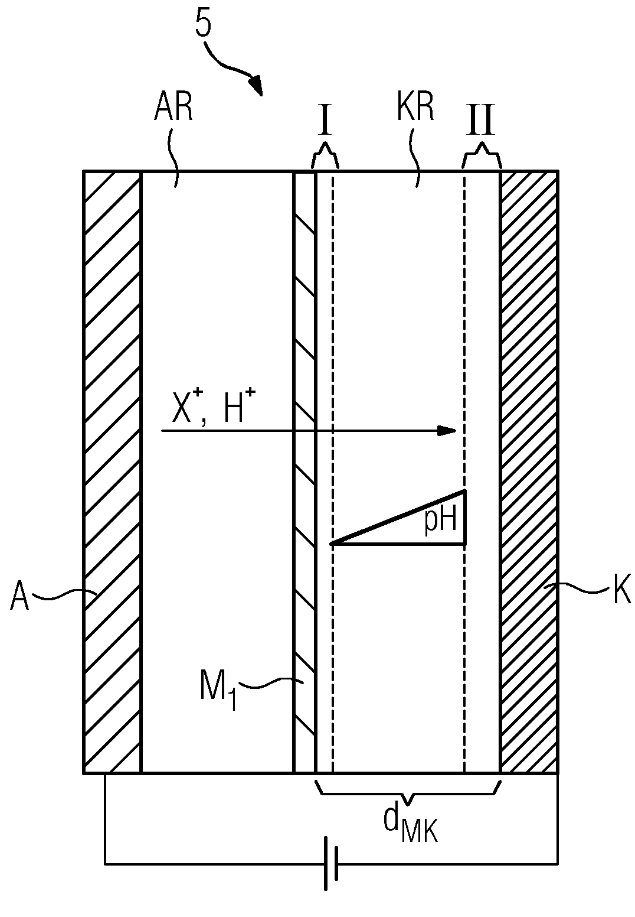

FIG 6

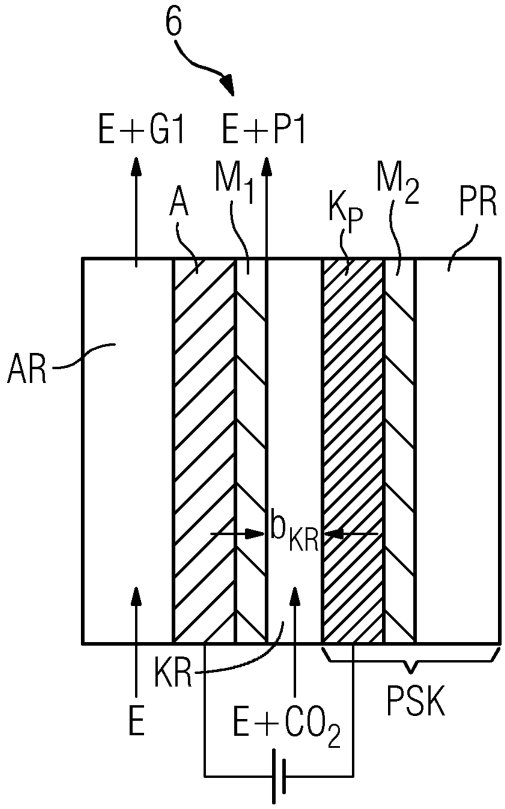
6
E+G1
E+P1
A
M1
KP
M2
PR
AR
bKR
KR
E
E+CO2
PSK

FIG 7

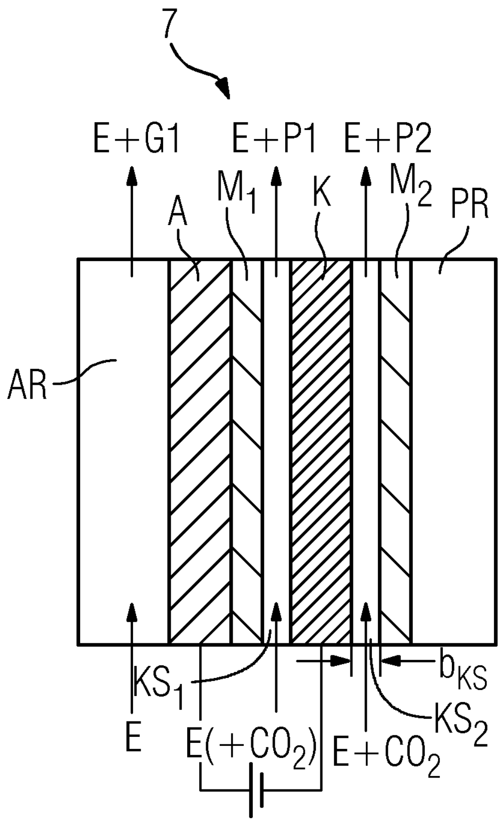
7
E+G1
E+P1
E+P2
A
M1
K
M2
PR
AR
KS1
bKS
KS2
E
E(+CO2)
E+CO2

FIG 8

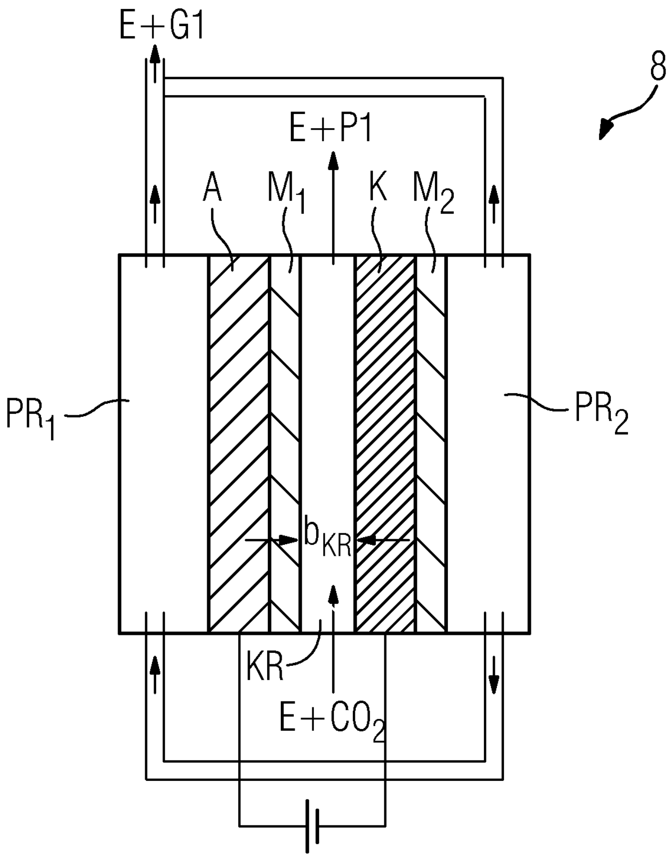
E+G1
8
E+P1
A
$M_1$
K
$M_2$
$PR_1$
$PR_2$
$b_{KR}$
KR
E+$CO_2$

FIG 9

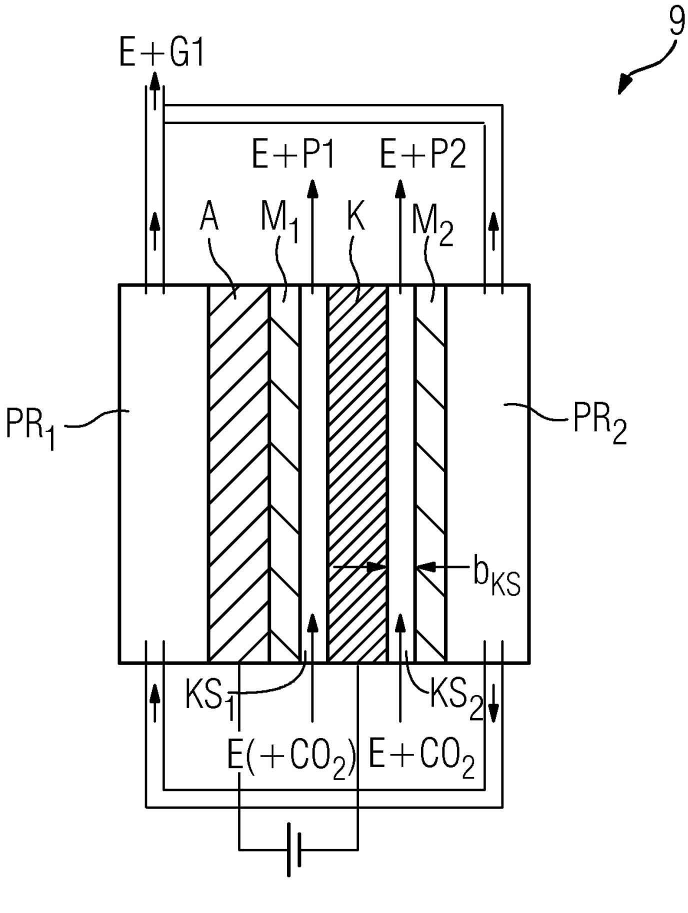
9
E+G1
E+P1
E+P2
A
$M_1$
K
$M_2$
$PR_1$
$PR_2$
$b_{KS}$
$KS_1$
$KS_2$
E(+$CO_2$)
E+$CO_2$

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2013105304 A1
- US 2013186771 A1
- US 2014093799 A1
- US 2012318680 A1
- WO 2013178803 A1
- WO 2012128148 A1


### In der Beschreibung aufgeführte Nicht-Patentliteratur


- Modern Aspects of Electrochemistry. Springer, 2008, 89-189
- **Y. HORI et al.** Handbook of Fuel Cells - Fundamentals, Technology and Applications. John Wiley & Sons, Ltd, 2010, 2